# EUROPEAN PATENT SPECIFICATION

(11) **EP 0 635 604 B1**
(45) Date of publication and mention of the grant of the patent: **26.08.1998**
(21) Application number: 94500130.3
(22) Date of filing: 20.07.1994
(51) Int. Cl.: E03C 1/32, A47K 1/00, F16F 1/12

(54) **Device for adjustably attaching a washbasin to its semipedestal**
Vorrichtung zur verstellbaren Befestigung eines Waschtisches an ihrem Halbuntergestell
Dispositif pour la fixation réglable d'un lavabo sur son semi-piédestal

(30) Priority: 22.07.1993 ES 9302055 U
(43) Date of publication of application: 25.01.1995
(73) Proprietor: COMPANIA ROCA-RADIADORES, S.A., E-08850 Gava (Barcelona) (ES)
(72) Inventor: Singla Palacin, Jaime, E-08029 Barcelona (ES)
(74) Representative: Ponti Sales, Adelaida

(56) References cited:
- EP-A- 0 234 291
- DE-A- 3 021 680
- GB-A- 2 144 199

## Description

The present invention relates to a device for adjustably attaching a washbasin to its semipedestal, by means of which it is possible to compensate for the differences and gaps that exist between the juxtaposed parts of a washbasin and its semipedestal.

### BACKGROUND OF THE INVENTION

The currently known means for attaching a semipedestal to a washbasin are normally fixed to the wall by means of screws and wall plugs, making accurate assembly difficult and causing considerable damage to the tiling.

Another known system is to join both parts by means of a closed spring fixed inside a hole made in the basin and another hole made in the semipedestal, the main drawback of this system being the opening of some of the springs with a considerable force when the semipedestal is handled.

Document DE-A-3021680 represents the prior art as referred to in the preamble of claim 1.

In this document, it's disclosed a device for adjustably attaching a washbasin to its semipedestal, comprising a tension spring, the ends of said spring each terminating in securing means which, in a mounted state, are hidden inside the basin and at a point on the semipedestal, and adjusting means to adjust the tension of the spring.

### DESCRIPTION OF THE INVENTION

In order to solve the drawbacks described, the device that forms the object of the invention for adjustably attaching a washbasin to its semipedestal has been devised.

The attaching device is characterized in that the adjusting means consist of a screw-type device adapted to compress the spring to a greater or lesser extent.

The spring is a coiled spring which is housed, at least in part, inside a tubular body provided with at least one internal ledge that acts as a thread onto which the spring is screwed by means of its own coils. One end of the spring rests against a seat inside the tubular body. The ends of the spring are each provided with prolongations that protrude from the opposing ends of the tubular body and terminate in a shape similar to a hook.

In one embodiment of the device one of the ends of the spring is fastened to a screw for fixing the basin to a vertical wall whilst the other end is fixed in a hole provided in the semipedestal.

It is also foreseen that one of the ends of the spring is fastened directly to the wall whilst the other end is fixed in a hole provided in the semipedestal.

### BRIEF DESCRIPTION OF THE DRAWINGS

In order that the present invention be better understood, the accompanying drawings show by way of nonlimiting example one practical embodiment of the attaching device.

In said drawings:

Figure 1 is a perspective view of the device with one of its ends fastened to a fixing screw.

Figure 2 is a longitudinal section view of the disassembled and extended device.

Figure 3 is a view similar to the previous one but in which the device is compressed.

Figure 4 is lateral elevation view of the device fitted to a washbasin and semipedestal and in the extended position.

Figure 5 is a view similar to the previous one but in which the device is compressed, maintaining the washbasin and the semipedestal close together.

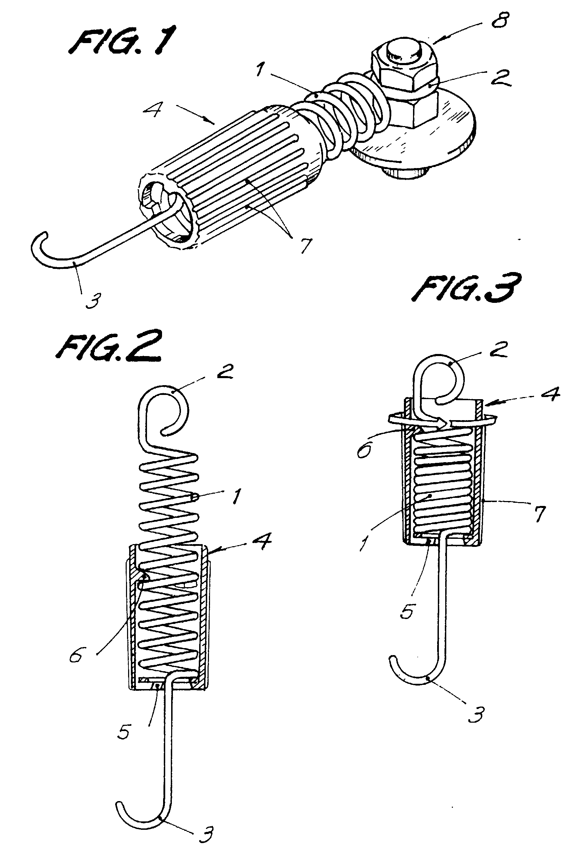

### DESCRIPTION OF A PREFERRED EMBODIMENT

As shown in the drawings, the device for adjustably attaching a washbasin to its semipedestal comprises a spring 1, one of whose ends is provided with a curved prolongation in the shape of a ring 2, its other end being provided with a prolongation in the shape of a hook 3.

The spring 1 is housed inside a tubular body 4 provided at one of its ends with an internal seat 5 on which one end of the spring rests. Inside the body 4 is a spiral-type ledge 6 to which the spring 1 is screwed. The outer surface of the tubular body 1 is provided with longitudinal ribs 7 to make it easier to rotate said tubular body like a screw in order to compress the spring inside the body 4 to a greater or lesser extent.

As can be appreciated from the description and drawings, the ring-shaped end 2 is fastened to a pin or screw 8 designed to fix a washbasin 9 to a vertical wall . The hook-shaped end 3 is inserted in a hole 10 situated close to the upper part of a semipedestal 11. It is also possible for the ring-shaped end 2 of the spring 1 to be fastened to a pin or other similar device fixed directly to the wall.

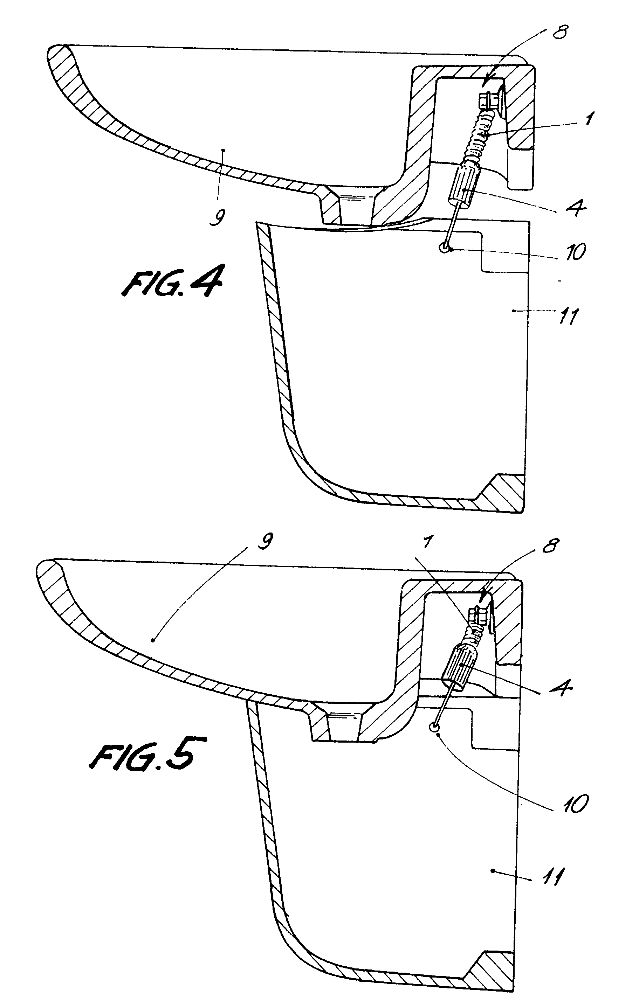

In any case, the device is fitted to both sides of the washbasin 9 and semipedestal 11 with the spring 1 extended, as shown in figure 4. The tubular body 4 is then rotated like a screw so that the internal ledge 6 screws the spring and compresses it gradually until a perfect fit between the juxtaposed parts of the washbasin and semipedestal is achieved.

The attaching device described makes it possible to correct for the differences in symmetry and dimensions that may exist between the adjacent parts of the pieces to be attached. Furthermore, the assembly and disassembly of the device is very simple and does not require the use of tools, since the action of rotating by hand either or both of the screws enables an accurate, symmetrical join to be achieved with a sufficient assembly pressure to prevent breakage due to excessive interference between them.

The materials used to manufacture the components of the adjustable attaching device, as well as the shapes and dimensions thereof, and all other details which may arise are independent of the invention as defined by the appended claims.

## Claims

1. A device for adjustably attaching a washbasin (9) to its semipedestal (11), comprising a tension spring (1), the ends of said spring each terminating in securing means which, in a mounted state, are hidden inside the basin (9) and at a point on the semipedestal (11), and adjusting means to adjust the tension of the spring, characterized in that the adjusting means consist of a screw-type device adapted to compress the spring (1) to a greater or lesser extent.

2. A device for adjustably attaching a washbasin and its semipedestal according to claim 1, characterized in that the spring (1) is a coiled spring which is housed, at least in part, inside a tubular body (4) provided with at least one internal ledge (6) that acts as a thread onto which the spring (1) is screwed by means of its own coils, one end of the spring (1) resting against a seat (5) inside the tubular body (4), the ends (2,3) of the spring (1) being each provided with prolongations that protrude from the opposing ends of the tubular body (4) and terminate in a shape similar to a hook.

3. A device for adjustably attaching a washbasin and its semipedestal according to claims 1 and 2, characterized in that one of the ends (2) of the spring (1) is fastened to a screw (8) for fixing the basin (9) to a vertical wall whilst the other end (3) is fixed in a hole (10) provided in the semipedestal (11).

4. A device for adjustably attaching a washbasin and its semipedestal according to claims 1 and 2 characterized in that one of the ends of the spring (1) is fastened directly to the wall whilst the other end (3) is fixed in a hole (10) provided in the semipedestal (11).

5. A device for adjustably attaching a washbasin and its semipedestal according to claims 1 and 2, characterized in that one end of the spring (1) is fixed in a hole provided in the basin (9) and the other end (3) is fixed in 5 a hole (10) provided in the semipedestal (11).

## Patentansprüche

1. Vorrichtung zum einstellbaren Anbringen eines Waschbekkens (9) an seinem Halbsockel (11) mit einer Spannungsfeder (24), wobei die Enden der Feder jeweils in einer Anbringungseinrichtung enden, welche in einem montierten Zustand innerhalb des Beckens (9) und an einem Punkt auf dem Halbsockel (11) verborgen sind, und mit einer Einstelleinrichtung (45) zum Einstellen der Spannung der Feder, dadurch gekennzeichnet, daß die Einstelleinrichtung (45) eine Schraubvorrichtung aufweist, welche zum Komprimieren der Feder (1) in größerem oder geringerem Ausmaß dient.

2. Vorrichtung zum einstellbaren Anbringen eines Waschbekkens und seines Halbsockels gemäß Anspruch 1, dadurch gekennzeichnet, daß die Feder (1) eine Spiralfeder ist, welche zumindest teilweise innerhalb eines röhrenförmigen Körpers (4) untergebracht ist, der mit mindestens einem Absatz (6) versehen ist, welcher als Gewinde wirkt, auf das die Feder (1) mittels ihrer eigenen Windungen schraubbar ist, wobei ein Ende der Feder (1) auf einem Sitz (5) innerhalb des röhrenförmigen Körpers (4) ruht, wobei die Enden (2, 3) der Feder (1) jeweils mit Verlängerungen versehen sind, die aus den gegenüberliegenden Enden des röhrenförmigen Körpers (4) herausragen und in einer Gestalt ähnlich der eines Hakens enden.

3. Vorrichtung zum einstellbaren Einbringen eines Waschbekkens und seines Halbsockels gemäß Anspruch 1 und 2, dadurch gekennzeichnet, daß eines der Enden (2) der Feder (1) an einer Schraube (8) zum Befestigen des Beckens (9) an einer vertikalen Wand befestigt ist, wobei das andere Ende (3) in einem Loch (10) befestigt ist, welches in dem Halbsockel (11) vorgesehen ist.

4. Vorrichtung zum einstellbaren Anbringen eines Waschbekkens und seines Halbsockels gemäß Anspruch 1 und 2, dadurch gekennzeichnet, daß eines der Enden der Feder (1) direkt an der Wand befestigt ist, wobei das andere Ende (3) in einem Loch (10) befestigt ist, welches in dem Halbsockel (11) vorgesehen ist.

5. Vorrichtung zum einstellbaren Anbringen eines Waschbekkens und seines Halbsockels gemäß Anspruch 1 und 2, dadurch gekennzeichnet, daß ein Ende der Feder (1) in einem Loch befestigt ist, das in dem Becken (9) vorgesehen ist, und das andere Ende (3) in einem Loch (10) befestigt ist, das in dem Halbsockel (11) vorgesehen ist.

## Revendications

1. Dispositif pour solidariser de manière ajustable une cuvette de lavabo (9) à sa semi-colonne (11), comprenant un ressort de tension (24), les extrémités dudit ressort se terminant chacune par des moyens de fixation qui, à l'état monté, sont cachés à l'intérieur de la cuvette (9) et à un endroit sur la semi-colonne (11), et des moyens d'ajustement (45) pour ajuster la tension du ressort, caractérisé en ce que les moyens d'ajustement (45) consistent en un dispositif de type vissant adapté pour comprimer le ressort (1) vers une extension supérieure ou inférieure.

2. Dispositif pour solidariser de manière ajustable une cuvette de lavabo et sa semi-colonne selon la revendication 1, caractérisé en ce que le ressort (1) est un ressort à spires qui est logé, au moins en partie, à l'intérieur d'un corps tubulaire (4) présentant au moins une saillie interne (6) qui agit à la manière d'un filet sur lequel le ressort (1) se visse au moyen de ses propres spires, une extrémité du ressort (1) étant en appui contre un siège (5) à l'intérieur du corps tubulaire (4), les extrémités (2, 3) du ressort (1) étant chacune munie de prolongements en saillie depuis les extrémités opposées du corps tubulaire (4) et qui se terminent par une forme similaire à un crochet.

3. Dispositif pour solidariser de manière ajustable une cuvette de lavabo et sa semi-colonne selon les revendications 1 et 2, caractérisé en ce que l'une des extrémités (2) du ressort (1) est solidarisée à une vis (8) pour fixer la cuvette (9) à une paroi verticale tandis que l'autre extrémité (3) est fixée dans un trou (10) prévu dans la semi-colonne (11).

4. Un dispositif pour solidariser de manière ajustable une cuvette de lavabo et sa semi-colonne selon la revendication 1 et 2, caractérisé en ce que l'une des extrémités du ressort (1) est solidarisée directement à la paroi tandis que l'autre extrémité (3) est fixée dans un trou (10) prévu dans la semi-colonne (11).

5. Dispositif pour solidariser de manière ajustable une cuvette de lavabo et sa semi-colonne selon l'une des revendications 1 et 2, caractérisé en ce qu'une extrémité du ressort (1) est fixée dans un trou prévu dans le lavabo (9) et l'autre extrémité (3) est fixée dans un trou (10) prévu dans la semi-colonne (11).
